# EUROPEAN PATENT APPLICATION

(11) **EP 1 640 419 A1**
(43) Date of publication of application: **29.03.2006**
(21) Application number: 04077678.3
(22) Date of filing: 28.09.2004
(51) Int. Cl.: C09D 7/12, C09D 5/02, C09C 3/08, C08K 9/04

(54) **Water repellent coating comprising a hydrophobically modified layered silicate**

(71) Applicant: Nederlandse Organisatie voor Toegepast-Natuurwetenschappelijk Onderzoek TNO, 2628 VK Delft (NL)
(72) Inventor: The designation of the inventor has not yet been filed
(74) Representative: Winckels, Johannes Hubertus F.

(57) **Abstract**

The application relates to a water repellent coating, to a composition for applying such a coating, and to method for preparing said composition. A coating according to the invention has a very high water contact angle and a very low water sliding angle. Advantageously, a coating according to the invention may have self-cleaning properties.

## Description

The invention relates to a water repellent coating, to a composition for applying such a coating, and to method for preparing said composition.

Surfaces having amazing water repellence are known in nature, such as of the leaves of the Lotus plant (*Nelumbo nucifera L.*)*.* Besides the Lotus plant, many other species, such as Indian Cress (*Tropaeolum majus L.*) and Ladys Mantle (*Alchemilla vulgaris L.*) have leaves with a surface capable of making water bead off completely and thereby wash off contamination very effectively. This effect is common among many plants and of tremendous technological interest. Surfaces which approach the water repellence of these natural surfaces are sometimes said to exhibit a Lotus effects® , or referred to as superhydrophobic surfaces.

Based on studies of the surface of plant leaves, many attempts have been made to achieve great water repellence for industrial surfaces and coatings. It has been postulated that such surfaces may be made self-cleaning. The self-cleaning mechanism of such surfaces relies on the miniscule contact area of water drops with these surfaces.

Examples of disclosures of attempts to generate self-cleaning surfaces can be found in, *inter alia,* WO-A-96/04123, DE-OS-101 38 036, WO-A-03/022463, WO-A-00/58410, WO-A-02/064266, and WO-A-03/013827. The surfaces disclosed in these documents are prepared with a view to achieving the same type of roughness, in terms of microstructure and macrostructure, as has been reported to exist on the surface of plant leaves that exhibit the Lotus effect.

One of the (quantifiable) characteristics of a water repellent surface exhibiting is a high water contact angle. Surfaces with a water contact angle of more than 150° have been developed by introducing proper roughness on materials having low surface energies. However, the water contact angle is insufficient for the evaluation of the sliding properties of water droplets on surfaces. A surface with a high contact angle of water does not always show a low sliding angle (or roll-off angle), which is defined as the critical angles where a water droplet with a certain weight begins to slide down the inclined surface. It is believed that in a discussion of the hydrophobicity, the sliding angle of water droplets should be evaluated separately from the contact angle.

In accordance with the invention it has been found that a surface can be provided with a water repellent coating, having an extremely low wettability. The coating is based on a curable resin dispersed in a suitable solvent, together with particles of partially exfoliated, modified clay, and agglomerates of said particles.

Advantageously, a coating according to the invention may have a water contact angle as high as 130°, or higher, preferably even greater than 150°. Also, a coating according to the invention may have a water sliding angle as low as 10°, or lower, more preferably smaller than 5°. In a preferred embodiment, the high water contact angle is combined with the low water sliding angle thereby creating a coated surface having self-cleaning properties.

It is one of the advantages of the invention that water repellent properties can be imparted on any conventional type of coating. Accordingly, a composition for applying a coating according to the invention can be any conventional coating composition.

Coating compositions typically comprise one or more curable resins. The resin is preferably resin selected from the group of polyurethanes, polyacrylates, polymethacrylates, polyesters, polyethers, polyolefins, polystyrene, polyvinyl chloride, alkyds, nitrocellulose, epoxides, phenol resins, amino resins, organic-inorganic hybrid materials, and combinations thereof. Particularly preferred resins are polyurethanes, polyesters, epoxides, and organic-inorganic hybrid materials.

The term 'curable' intends to convey that before application the coating composition is in a easily applicable and processable, typically liquid form. Upon drying, the composition will harden as a result of which the coating will be formed. This drying may involve in situ polymerisation of the curable resin if present in the coating composition in monomeric form, but can also involve cross-linking of the curable resin present already in polymeric form. A coating composition may or may not comprise a suitable solvent, which will typically evaporate upon curing; hence the term 'drying'. If present, the solvent will preferably be chosen from the group of water, alcohols, acetates, aliphatic and aromatic hydrocarbons, and combinations thereof. More preferably, water is used as the solvent.

Optionally, the coating, and thus also the coating composition, may comprise additional components. Examples of such additional components of the coating composition are any known additives for such compositions such as pigments, fillers, wetting and dispersing additives, curing agents, preservatives, UV stabilizers, surface additives, rheological additives, and defoamers. Pigments and fillers are preferably used in an amount not exceeding the critical pigment volume concentration (CPVC). This amount is dependent on the type of pigment, or filler and the type of resin. The other additives, if present, are preferably used in an amount between 0.01 and 1 wt.% based on the total coating composition.

An important aspect of a coating according to the invention is that it comprises primary particles of a modified clay, as well as agglomerates of said primary particles.

The incorporation of clay into polymeric materials or coatings is known per se (see for instance WO 99/07790 or WO 01/04050). A great difficulty when including a clay in a polymeric material resides in the mutually rather different nature of the materials. The polymeric material is a usually non-polar organic material, whereas the clay is a much more polar inorganic material. Because of this difference the materials are poorly intermixable; they are intrinsically not mixable. In order to overcome this problem, the clay is typically modified to allow it to be dispersed into the polymeric material as homogeneously as possible.

The majority of clay materials that have been used in combination with polymeric materials are composed of primary particles having the form of platelets. Typically, the modification of the clay for incorporation into the polymeric material involves exfoliation or intercalation of the clay, which is a process in which the primary particles are separated from each other. Often a modifier is introduced to keep the primary particles, which modifier is chosen to be compatible with both the clay and the polymeric material.

In accordance with the present invention, the clay is also modified to allow incorporation into the polymeric material of the resin. However, the clay material should not be treated such that all primary particles are separated from one another. In accordance with the invention, it is important that both separated primary particles and agglomerates of said primary particles are present. The agglomerates preferably have a size in the range of from 50 nm to 100 µm, more preferably of from 0.2 to 10 µm.

A clay used for a coating according to the invention is preferably based on a clay having a layered or fibrous structure. The clay may be of a natural or synthetic nature. Preferably, the clay has a large contact surface.

Very suitable are clay types based on layered silicates, such as layered phyllosilicate composed of magnesium and/or aluminum silicate layers which are each about 7-12 A in thickness. Especially preferred are smectite-like clay minerals, such as montmorillonite, saponite, hectorite, fluorohectorite, beidellite, nontronite, vermiculite, halloysite and stevensite, and particularly fibrous clays like sepioloite, attapulgite and palygorskite. It will be understood that combinations of one or more of these clays can also be used.

A suitable clay type preferably has a cation exchange capacity of from 5 to 250 milliequivalents per 100 gram. In a preferred embodiment, the clay is a fibrous clay and the cation exchange capacity is in the range of from 5 to 30 milliequivalents per 100 gram. When this capacity exceeds the upper limit of 250 milliequivalents per 100 gram, it proves difficult to finely disperse the clay on a molecular level because of the strong mutual interaction of the clay layers or fibers. When the cation exchange capacity is lower than the above lower limit, it turns out that the clay is hard to modify. Preferably, a clay is used a clay having a cation exchange capacity of from 25 to 200 milliequivalents per 100 gram.

In one embodiment, the clay may be modified so as to reach the desired presence of primary particles and agglomerates by swelling the clay, subjecting the clay to an ion exchange step with a hydrophobic modifier. The thus obtained primary particles of modified clay and agglomerates of primary particles of modified clay can conveniently be dispersed in the curable resin, optionally together with the solvent.

Although not necessary to achieve good results, it is possible to grind or pulverize the clay prior to the swelling. Such a pretreatment of the clay may result in an easier and better mixability of the different constituents. The swelling of the clay is preferably done by soaking the clay in a suitable solvent. Typically, the solvent will be water, an alcohol such as ethanol, n-propanol, or i-propanol, or a mixture of one or more of these solvents. It is preferred that the temperature of the solvent during the swelling is in the range of from 25-80°C, more preferably from 40-70°C. Typically, the swelling will require from 2 to 30 minutes. In general, the amount of solvent used is 90 to 99 wt.%, based on the combined amounts of solvent and clay.

In a preferred embodiment, the hydrophobic modifier has a surface tension which is lower than the surface tension of the resin.

One preferred example of a suitable hydrophobic modifier to be used in accordance with the invention is a compound comprising an aliphatic carbon chain of from 6 to 18 carbon atoms, wherein a functional and/or ionic group is present at at least one distal end of the carbon chain. The carbon chain may or may not contain unsaturated bonds or other substituents. For instance, in one preferred embodiment the carbon chain is partially or completely fluorinated. The functional group at the distal end of the carbon chain may be a hydroxyl, amino or thiol group. Hydroxyl and amino groups are preferred. Particularly preferred hydrophobic modifiers are C₆F₁₃-C₂H₄OH (commercially available under the name of Fluowet EA600), C₈F₁₇-C₂H₄OH (commercially available under the name of Fluowet EA800), primary alkanols having from six to 18 carbon atoms (in other words 1-hexanol through 1-octadecanol).

Another preferred example of a suitable hydrophobic modifier is a compound comprising a siloxane chain having a length of from 4 to 50, preferably from 15 to 45 monomeric siloxane units, wherein a functional group and/or ionic is present at both distal ends of the chain. The functional group at the distal end of the carbon chain may be a hydroxyl, amino or thiol group. Hydroxyl and amino groups are preferred.

It will be understood that combinations of different hydrophobic modifiers, in particular of a hydrophobic modifier based on a carbon chain and a hydrophobic modifier based on a siloxane chain are also contemplated by the invention.

The ion exchange can take place by adding a solution of the modifier to a dispersion of the clay in a suitable solvent at elevated temperature. Typically, the solvent will be water, an alcohol such as ethanol, n-propanol, or i-propanol, or a mixture of one or more of these solvents. Preferably the dispersion is the one described above in which the clay is swollen. Hence, the steps of swelling the clay and subjecting it to ion exchange may be carried out more or less simultaneously.

The modifier is preferably dissolved in the solvent used in a concentration of between 1% and 50%. The amount of modifier that is used in the ion exchange is selected depending on the ion exchange capacity (CEC) of the clay and molar mass and number of reactive and/or ionic groups of the modifier. The pH of the modifier solution is preferably between 2 and 10, depending on the selected clay and the modifier, and can be adjusted with suitable buffers. The amount of modifier used is preferably 50 to 150% of the ion exchange capacity of the clay.

After the ion exchange, the modified clay is preferably washed a few times with water and filtrated. If desired, the material can be dried, for instance in an oven or by spray-drying or freeze-drying.

After the step of ion exchange, the desired combination of primary particles of modified clay, and agglomerates of said particles is obtained. As mentioned above, the final coating composition can be obtained by dispersing the primary particles and agglomerates into the curable resin, optionally together with a solvent and other additives.

A coating composition can be used for coating any surface which can be coated with conventional coating composition based on the used curable resin. Accordingly, a great number of different surfaces may be provided with water repellent properties and, in preferred embodiments, even self-cleaning properties. It is contemplated that also non-flat, e.g. fibrous, surfaces are provided with a coating according to the invention. The manner of application of the coating composition will be similar to the manner in which conventional coating compositions based on the used curable resin are applied. Upon dyring and curing of the resin, the desired coating is obtained.

Applications for which a coating according to the invention are particularly considered useful are applications where a surface having non-sticking, low friction, anti-fouling, self-cleaning, and/or water repellant properties are desired. It is further conceived that a coating according to the invention may be used as a masking coating, only partially covering a surface (e.g. in a particular pattern) upon which a second coating is applied. The second coating will then adhere only to the parts of the surface not covered with the coating according to the invention. It is further conceived that a coating according to the invention may be used in a mould, facilitating the removal of a molded article from the mould.

The invention will now be elucidated by the following, non-restrictive examples.

### Examples

### Materials

### RHS07

Is an inorganic-organic hybrid formulation comprising:
- 3-Glycidoxypropyl trimethoxysilane (GLYMO, organic precursor/connector)
- Methyl trimethoxysilane (MTMS, inorganische precursor)
- Aluminium-tri-sec-butoxide (catalyst)
- Water (reactant)
- Isopropylalcohol (IPA, solvent)

### IH73

Is a natural sodium montmorillonite having a cation exchange capacity (CEC) of 95 meq/100g and a diameter of about 450 nm (EXM 757, Südchemie), which is modified using a primary amine functionalized siloxane (Tegomer® A-Si-2322, Degussa). The modification of the clay was performed by dispersing 20 g of the clay in an ethanol water solvent mixture (3:1) at room temperature. The pH value was set to 4 by addition of 4N HCl. 48 g of the amino-modified siloxane was dissolved in ethanol at 40°C and added to the clay suspension. The mixture was stirred for 20 hours, filtrated and then washed with ethanol-water and water. The modified clay was dried by freeze drying.

### IH452

Is a natural sepiolite having a fibrous structure (Pangel FF, Tolsa S.A.) and a cation exchange capacity (CEC) of 14 meq/100g and a length of about 2 µm, which is modified using a primary amine functionalized siloxane (Tegomer® A-Si-2322, Degussa). The modification of the clay was performed by dispersing 40 g of the clay in an ethanol water solvent mixture (3:1) at room temperature. The pH value was set to 4 by addition of 4N HCl. 14 g of the amino-modified siloxane was dissolved in ethanol at 40°C and added to the clay suspension. The mixture was stirred for 20 hours, filtrated and then washed with ethanol-water and water. The modified clay was dried by freeze drying.

### Polyurethanes

- Desmophen 650 MPA (polyester polyol of about 65% in 1-methoxypropylacetate-2 (MPA)) having a hydroxyl content of 5 %wt
- Desmophen 670 BA (polyester polyol of about 80% in butyl acetate) having a hydroxyl content of 3.4 %wt.

### Curing agents

Desmodur N 75 MPA (an aliphatic polyisocyanate of about 75% in 1-methoxypropylacetate-2) having an isocyanate content of 16.6 %wt
Bayhydur VP LS 2336 (100 % aliphatic polyisocyanate) having an isocyanate content of 16.2 %wt
Bayhydrol XP 2428 (polyester polyol of about 80 % in N-methyl pyrrolidone (NMP)) having a hydroxyl content of 1.9 %wt.

### Example 1

This example relates to a solvent based polyurethane resin and an organic-inorganic hybrid in combination with platelet structured hydrophobic modified clay. The hybrid formulation is stirred with a Dispermat at 10.000 rpm while cooling for several minutes before the mixture is cast on a glass substrate with a 150 µm doctor blade. After solvent evaporation the coating is cured at 130 °C for 3 hours. For the polyurethane formulation the clay is first mixed with Desmophen 650 MPA at 10.000 rpm with a Dispermat before the other components are added. After adding the other components the mixture is mixed again at 1000 rpm and cast on a glass substrate with a 150 µm doctor blade. After solvent evaporation the coatings are cured at 60 °C for 24 hours. The compositions of the coating compositions is shown in Table 1.

**Table 1:**

| | Sample 1 | Sample 2 | Sample 3 |
|---|---|---|---|
| Hybrid RHS07 | 45.73 gram | | |
| Desmophen 650 MPA | | 21.46 gram | 11.74 gram |
| Desmodur N75 MPA | | 12.91 gram | 8.77 gram |
| Modified clay IH73 | 4.02 gram | 3.93 gram | 5.96 gram |
| MPA | | 16.70 gram | 11.22 gram |
| %wt modified clay | 31 % | 15 % | 30 % |
| %wt clay | 8.5 % | 4.2 % | 8.4 % |

Contact angle measurements are conducted with a Krüss DSA-10-MK2 with diiodomethane (Aldrich, 99%) and water (Millipore 18,2 MΩ) as 'wetting' liquids using a video recorder with the sessile drop method. The results are shown in Table 2. They are averages of about three drops measured for 10 seconds, recording about 20 points per measurement.

**Table 2: contact angle measurements**

| | ΘH₂O (°) | ΘCH₂I₂ (°) | % clay |
|---|---|---|---|
| Reference PU* | 72±1 | 38±1 | - |
| Reference Hybrid** | 77±6 | 52±2 | - |
| Sample 1 | 102±1 | 77±1 | 8.5% |
| Sample 2 | 102±1 | 79±1 1 | 4.2 % |
| Sample 3 | 102±2 | 83±1 | 8.4 % |

| | | | |
|---|---|---|---|
| * Reference PU is surface coated with same polyurethane coating, without modified clay ** Reference Hybrid is surface coated with same hybrid coating, without modified clay | | | |

The measurement of the roll-off angle is conducted with a turn over table from the horizontal position (0°) to the upright position (90°) with water drops of 60 µl deposited on the substrate before turning over the table. The results are shown in Table 3.

**Table 3: roll-off angle, roughness and anti-graffiti**

| | Roll-off angle (°) | Ra (µm) | Anti-graffiti | % clay |
|---|---|---|---|---|
| Reference PU* | 34±1 | 0.08± 0.01 | - - | |
| Reference Hybrid" | 24±2 | 0.03± 0.01 | | |
| Sample 1 | 12±1 | 0.92±0.10 | | 8.5 % |
| Sample 2 | 30±1 | 0.98±0.10 | ++ | 4.2 % |
| Sample 3 | 27±1 | 2.85±0.81 | + | 8.4 % |

| | | | | |
|---|---|---|---|---|
| * Reference PU is surface coated with same polyurethane coating, without modified clay | | | | |
| ** Reference Hybrid is surface coated with same hybrid coating, without modified clay | | | | |

The reference hybrid and sample 1 are also exposed to outdoor UV, rain and dirt. After the exposure the contact angles are higher for both coatings and also the roll-off angles are higher. With Environmental Scanning Electron Microscopy (ESEM) the surface of the coatings is scanned and on the reference coating many dirt particles are present, but the surface of the sample 1 coating is still clean. This is confirmed by roughness measurements where the roughness of the reference coating increases up to 0.09 µm and the sample 1 coating decreases to 0.70 µm.

### Example 2

This example relates to a solvent based polyurethane resin and a organic-inorganic hybrid in combination with hydrophobic modified clay fibres. The hybrid formulation is stirred with a Dispermat at 10.000 rpm while cooling for several minutes before the mixture is cast on a glass substrate with a 150 µm doctor blade. After solvent evaporation the coating is cured at 130 °C for 3 hours. For the polyurethane formulation the clay is first mixed with Desmophen 650 MPA at 10.000 rpm with a Dispermat before the other components are added. After adding the other components the mixture is mixed again at 1000 rpm and cast on a glass substrate with a 100 µm doctor blade. After solvent evaporation the coatings are cured at 60 °C for 24 hours. The compositions of the coating compositions are shown in Table 4.

**Table 4:**

| | Sample 4 | Sample 5 | Sample 6 | Sample 7 | Sample 8 | Sample 9 |
|---|---|---|---|---|---|---|
| Hybrid RHS07 | 9.26 gram | 15.0 gram | 3.58 gram | | | |
| Desmophen 650 MPA | | | | 5.37 gram | 1.43 gram | 5.70 gram |
| Desmodur N75 MPA | | | | 3.34 gram | 0.88 gram | 3.55 gram |
| Modified clay IH452_1 | 6.48 gram | 3.0 gram | 1.84 gram | 2.88 gram | 3.99 gram | 6.17 gram |
| IPA | 14.26 gram | | 3.58 gram | | | |
| MPA | | | | 5.59 gram | 13.5 gram | 13.33 gram |
| %wt modified clay | 78 % | 20 % | 72 % | 33 % | 72 % | 50 % |
| %wt clay | 57.7 % | 14.8 % | 53.3 % | 24.4 % | 53.3 % | 37 % |

Contact angle measurements are conducted with a Krüss DSA-10-MK2 with diiodomethane (Aldrich, 99%) and water (Millipore 18,2 MΩ) as 'wetting' liquids using a recorder with the sessile drop method. The results are shown in Table 5. They are averages of about three drops measured for 10 seconds, recording about 20 points per measurement.

**Table 5: contact angle and roll-off angle measurements**

| | ΘH₂O(°) | ΘCH₂I₂(°) | Roll-off angle (°) | %wt clay |
|---|---|---|---|---|
| Sample 4 | 149±1 | 125±0 | 17±1 | 57.7 |
| Sample 5 | 125±1 | 102±4 | > 50 | 14.8 |
| Sample 6 | 146±1 | 126±1 | | 53.3 |
| Sample 7 | 133±0 | 107±3 | 43±3 | 24.4 |
| Sample 8 | 151±1 | 129±1 | | 53.3 |
| Sample 9 | 140±1 | 111±2 | 35±1 | 37.0 |

The method described in Example 1 to measure the roll-off angle cannot be used for these coatings, because a slight movement of the substrate makes the drops roll-off at much lower angles. This method would not represent the reality, because the substrate is always wetted and/or cleaned with moving droplets during application. That is why this method is changed by dropping 60 µl droplets from 1 cm above the substrate with the substrate at different angles. The results are shown in Table 6.

**Table 6: roll-off angle measurements other method**

| Roll-off angle | 2.5° | 5° | 10° | 20° |
|---|---|---|---|---|
| Sample 4 | ± | + | + | + |
| Sample 6 | - | ± | + | + |
| Sample 8 | ± | + | + | + |
| Sample 9 | - | - | - | ± |

Some of these coatings have been artificially weathered with an Atlas Ci 65 Weather-O-Meter according to DIN 53231 for 200 hours. The results of the weathered coatings are given in table 7.

**Table 7: contact angle and roll-off angle measurements after weathering.**

| | ΘH₂O (°) | ΘCH₂I₂ (°) | Roll-off 2.5° | Roll-off 5° | Roll-off 10° | Roll-off 20° |
|---|---|---|---|---|---|---|
| Sample 4 | 142±1 | 124±1 | - | - | ± | ± |
| Sample 9 | 129±1 | 95±1 | - | - | - | - |

The coatings with good results before weathering still have the same effect after weathering, although the effect is less.

### Example 3

This example relates to a water based polyurethane resin in combination with hydrophobic modified clay fibres. For these polyurethane formulation the two PU components are first mixed with the water and the Byk 024 at 10.000 rpm with a Dispermat before the clay is added. After adding the clay the mixture is mixed again by hand or stirring rod and cast on a glass substrate with a 100 µm doctor blade. After 30 minutes at room temperature the coating is cured at 60 °C for 24 hours. The compositions of the coating compositions are shown in Table 8.

**Table 8:**

| | Reference PU* | Sample 10 |
|---|---|---|
| Bayhydur VPLS 2336 | 0.93 gram | 0.99 gram |
| Bayhydrol XP 2428 | 4.06 gram | 4.08 gram |
| Water | 7.19 gram | 7.17 gram |
| Modified clay IH 452 | - | 2.10 gram |
| Byk 024 (2.5 %wt) | 0.36 gram | 0.34 gram |
| %wt modified clay | | 33 % |
| %wt clay | | 24.4 % |

| | | |
|---|---|---|
| * Reference PU is surface coated with same polyurethane coating, without modified clay | | |

Contact angle measurements are conducted with a Krüss DSA-10-MK2 with diiodomethane (Aldrich, 99%) and water (Millipore 18,2 MΩ) as 'wetting' liquids using a video recorder with the sessile drop method. The results are shown in Table 9. They are averages of about three drops measured for 10 seconds, recording about 20 points per measurement.

**Table 9: contact angle measurements**

| | ΘH₂O (°) | ΘCH₂I₂ (°) | %wt clay |
|---|---|---|---|
| Reference PU | 82±1 | 39±1 | 0 |
| Sample 10 | 137±1 | 107±2 | 24.4 |

In comparison to the solvent based PU resin with the same amount of modified clay (sample 7), this coating has the same contact angles.

## Claims

1. A water repellent coating comprising a resin, primary particles of a modified clay, and agglomerates of said particles.

2. A coating according to claim 1, wherein the particles are platelets or fibers.

3. A coating according to claim 1 or 2, wherein the clay is a layered silicate.

4. A coating according to claim 3, wherein the clay is chosen from the group of montmorillonite, saponite, hectorite, fluorohectorite, beidellite, nontronite, vermiculite, halloysite, stevensite, sepioloite, attapulgite, palygorskite, and combinations thereof.

5. A coating according to claim 4, wherein the clay is chosen from the group of sepioloite, attapulgite, palygorskite, and combinations thereof.

6. A coating according to any of the preceding claims, wherein the agglomerates have a size in the range of 50 nm to 100 µm, preferably of 0.2 to 10 µm.

7. A coating according to any of the preceding claim, wherein the clay is modified using a hydrophobic modifier.

8. A coating according to claim 7, wherein the modifier has a surface tension which is lower than the surface tension of the resin.

9. A coating according to claim 7, wherein the hydrophobic modifier comprises an, optionally partially or completely fluorinated, aliphatic carbon chain of from 6 to 18 carbon atoms, having a functional group at at least one distal end of the chain.

10. A coating according to claim 7, wherein the hydrophobic modifier comprises a siloxane chain having a length of between 4 and 50 monomeric units, preferably from 15 to 45 monomeric units, wherein a functional group is present at each distal end of the chain.

11. A coating according to any of the claims 1-6, wherein the clay is modified with a hydrophobic modifier according to claim 9, and with a hydrophobic modifier according to claim 10.

12. A coating according to any of the claims 9-11, wherein the functional group is chosen from the group of amino groups, hydroxyl groups, and thiol groups.

13. A coating according to any of the preceding claims, wherein the resin is selected from the group of polyurethanes, polyacrylates, polymethacrylates, polyesters, polyethers, polyolefins, polystyrene, polyvinyl chloride, alkyds, nitrocellulose, epoxides, phenol resins, amino resins, organic-inorganic hybrid materials, and combinations thereof.

14. A coating according to any of the preceding claims having a water contact angle greater than 130°, preferably greater than 150°..

15. A coating according to any of the preceding claims having a water sliding angle smaller than 10°, preferably smaller than 5°.

16. A coating composition for preparing a coating according to any of the preceding claims comprising a curable resin, primary particles of a modified clay, and agglomerates of said particles, optionally dispersed in a suitable solvent.

17. A composition according to claim 16, wherein the solvent is chosen from the group of water, alcohols, acetates, aliphatic and aromatic hydrocarbons, and combinations thereof.

18. A method for preparing a coating composition according to claim 16 or 17 comprising swelling the clay, subjecting the clay to an ion exchange step with the modifier, and dispersing the thus obtained primary particles of, modified clay, and agglomerates of said particles in the curable resin, optionally together with the solvent.

19. A method for forming a coating according to any of the claims 1-15 comprising applying a composition according to claim 16 or 17 to a surface to be coated, drying, and allowing the curable resin to cure to provide the coating.
